# EUROPÄISCHE PATENTANMELDUNG

(11) **EP 3 929 341 A2**
(43) Veröffentlichungstag der Anmeldung: **29.12.2021**
(21) Anmeldenummer: 21178426.9
(22) Anmeldetag: 09.06.2021
(51) Int. Cl.: D06F 33/37, D06F 39/02, D06F 103/22, D06F 105/42, A47L 15/44, G01F 23/24

(54) **DOSIEREINRICHTUNG**

(30) Priorität: 12.06.2020 DE 102020115590; 08.07.2020 DE 102020118060
(71) Anmelder: Saier, Beatrice, 79117 Freiburg / Kappel (DE); Saier, Michael, 79117 Freiburg / Kappel (DE)
(72) Erfinder: Saier, Michael, 79117 Freiburg/Kappel (DE)
(74) Vertreter: Roche, von Westernhagen & Ehresmann

(57) **Zusammenfassung**

Die Erfindung betrifft unter anderem eine Dosiereinrichtung (10) zur Dosierung und Zuführung von Medien(12a, 12b) über Fluidleitungen (14a, 14b) zu wenigstens einem Zielgerät (17), insbesondere zu einer gewerblichen textilen Waschmaschine, wobei die Dosiereinrichtung mit wenigstens einem Behältnis (11a, 11b) verbunden ist, das mit einem Medium befüllt ist, und wobei die Dosiereinrichtung eine Steuereinheit (15, 15a, 15b) aufweist, die zur Durchführung eines Dosierprozesses unter Zuhilfenahme wenigstens einer Pumpe (16) eine Entnahme eines bestimmten Volumens an Medium aus dem Behältnis und eine Förderung dieses Volumens hin zu dem Zielgerät veranlasst. Eine Besonderheit besteht darin, dass die Steuereinheit (15) mit einer Mehrzahl von Sensoren (19a, 19b, 19c) verbindbar ist, und dass der Steuereinheit (15) eine Schalteinrichtung (22) zugeordnet ist, mit der jeweils einer der Sensoren zur Verbindung mit der Steuereinheit auswählbar ist.

## Beschreibung

Die Erfindung betrifft zunächst eine Dosiereinrichtung nach dem Oberbegriff des Anspruches 1.

Derartige Dosiereinrichtungen werden von den Anmeldern und den mit den Anmeldern verbundenen Unternehmen, z. B. der Herbert Saier GmbH, seit Jahrzehnten entwickelt und gefertigt.

Die Dosiereinrichtung der gattungsgemäßen Art kann eingangsseitig, z. B unter Zuhilfenahme von Sauglanzen, mit einem oder mit mehreren Behältnissen verbunden sein, in dem sich gleiche oder unterschiedliche Medien befinden können. Ausgangsseitig kann die Dosiereinrichtung mit einem oder mit mehreren Zielgeräten, z. B. mit einer oder mehreren Waschmaschinen verbunden sein. Die zu fördernden Medien können z. B. Chemikalien, Chemikalienlösungen, Reinigungsmittel oder deren Bestandteile oder andere Fluide, insbesondere flüssige Materialien, sein.

Die Dosiereinrichtung kann bei der Durchführung eines Dosierprozesses - oder zu dessen Vorbereitung oder Nachbereitung - auf eine Mehrzahl von Sensoren zurückgreifen. Sie kann hierzu z. B. von Sensoren empfangene Informationen verarbeiten, insbesondere auf von Sensoren empfangende Messwerte zurückgreifen. So besteht beispielsweise für die Dosiereinrichtung die Möglichkeit, den Füllstand an Medium in einem oder in mehreren Behältnissen mittels eines Sensors zu überwachen, um vor Durchführung eines Dosierprozesses prüfen zu können, ob noch eine ausreichende Menge des für den Dosierprozess benötigten Mediums in dem Behältnis enthalten ist, und ob der durchzuführende Dosierprozess ordnungsgemäß durchgeführt werden kann.

Eine Messung der Höhe des Füllstandes an Medium in einem Behältnis kann z. B. mittels eines Sensors durchgeführt werden, der an einer Sauglanze angeordnet ist. Eine Sauglanze kann in das Behältnis eingesetzt werden. Mittels der Sauglanze kann aus dem Behältnis das Medium gefördert werden kann. Eine solche, an sich bekannte, Sauglanze des Standes der Technik kann hierzu beispielsweise einen Sensor aufweisen, der eine Messelektronik mit mehreren Schaltern umfasst. Je nach Füllstand kann ein an der Sauglanze angeordneter Schwimmerkörper, der auf der Oberfläche des Mediums aufschwimmt, unterschiedliche Schalter der Messelektronik betätigen. Infolge der unterschiedlichen Füllständen entsprechenden unterschiedlichen Schalterstellungen können z. B. unterschiedliche Stromaufnahmen durch die Messelektronik erreicht werden.

Eine Messung der Stromaufnahme durch den Sensor kann also einen Rückschluss auf den Füllstand zulassen.

Der Sensor kann über eine Leitung mit einer Steuereinheit der Dosiereinrichtung verbunden sein. Der Steuereinheit kann eine Messschaltung zugeordnet sein, die den von dem Sensor empfangenden Messwert auswertet, und z. B. die Stromaufnahme durch den Sensor misst. Die Steuereinheit kann auch eine Versorgungseinheit aufweisen oder steuern, die den Sensor mit Betriebsspannung oder mit Betriebsstrom versorgt.

Die Steuereinheit kann auch eine Auswerteeinheit oder Auswerteelektronik aufweisen, die dem ausgewerteten Messwert, also z. B. eine gemessene Stromaufnahme, einen bestimmten Füllstand zuordnen kann oder, gegebenenfalls auch unter Zuhilfenahme eines Mikroprozessors, prüfen und entscheiden kann, ob eine ausreichende Menge an Medium in dem Behältnis vorhanden ist.

Es sind des Weiteren Dosiereinrichtungen bekannt, die eingangsseitig an eine Mehrzahl von Behältnissen über eine Mehrzahl von Sauglanzen angeschlossen sind.

Der Erfindung liegt die Aufgabe zugrunde, eine Dosiereinrichtung der gattungsgemäßen Art derartig weiterzubilden, dass sie bei einfacher Bauweise eine Möglichkeit bereitstellt, Messwerte oder Informationen einer Vielzahl von Sensoren zu berücksichtigen.

Die Erfindung löst diese Aufgabe mit den Merkmalen des Anspruches 1, insbesondere mit denen des Kennzeichenteils und ist demgemäß dadurch gekennzeichnet, dass die Steuereinheit mit einer Mehrzahl von Sensoren verbindbar ist, und dass der Steuereinheit eine Schalteinrichtung zugeordnet ist, mit der jeweils einer der Sensoren zur Verbindung mit der Steuereinheit auswählbar ist.

Das Prinzip der Erfindung besteht somit im Wesentlichen darin, dass die Steuereinheit nicht dauerhaft fest mit jedem der Vielzahl von Sensoren verbunden ist, sondern dass zwischen der Mehrzahl der Sensoren und der Steuereinheit eine Schaltereinheit angeordnet ist. Mit der Schaltereinheit ist jeweils einer der Sensoren zur Verbindung mit der Steuereinheit auswählbar.

Die Schaltereinheit kann beispielsweise ein Analogschalter oder ein Analogmultiplexer sein, oder eine andere geeignete Schalteinrichtung, die nach Art eine Mehrfachschalters ausgebildet ist. Die Schalteinrichtung kann eine Mehrzahl von Eingängen und einen einzigen Ausgang aufweisen. In Folge einer Betätigung der Schalteinrichtung wird jeweils ein ausgewählter Eingang der Mehrzahl der Eingänge der Schalteinrichtung mit dem Ausgang der Schalteinrichtung verbunden.

Unabhängig von der Zahl der Sensoren wird ausgangsseitig der Schalteinrichtung nur eine Messschaltung, und nur eine Auswerteeinheit oder Auswerteelektronik, und insbesondere nur eine Steuerung benötigt. Für den Fall, dass die Steuereinheit den Sensor auch mit einer Versorgungsspannung oder mit einem Versorgungsstrom versorgt, wird für die Vielzahl von Sensoren auch nur eine Versorgungseinheit benötigt.

Mit der Schalteinrichtung können sukzessive unterschiedliche Sensoren ausgewählt werden, und so angesprochen werden, um sukzessive deren Informationen oder Messwerte zu erhalten.

Die Erfindung bezieht sich auf eine Dosiereinrichtung zur Dosierung und Zuführung von Medien jeglicher Art.

Derartige Dosiereinrichtungen, die auf die Anmelder zurückgehen, werden beispielsweise in folgenden deutschen Patentanmeldungen beschrieben, deren Inhalt hiermit in den Offenbarungsgehalt der vorliegenden Patentanmeldung vollumfänglich mit eingeschlossen wird, dies auch zu dem Zwecke, bei Bedarf einzelne oder mehrere Merkmale dieser Anmeldungen explizit in die vorliegende Patentanmeldung, auch in die Ansprüche der vorliegenden Patentanmeldung mit aufzunehmen:
DE 10 2011 119 021 A1, WO 2013/075692 A2, DE 10 2012 012 913 A1, DE 10 2014 002 560 A1, DE 10 2014 010 126 A1, EP 2 966 299 A1, DE 10 2015 110 862 A1, DE 10 2015 107 105 A1, EP 3 091 114 A1, DE 10 2015 107 976 A1, DE 10 2016 102 829 A1, DE 10 2017 114 767 A1, DE 10 2017 103 168 A1, DE 10 2016 125 928 A1, DE 10 2017 114 665 A1, DE 10 2018 106 045 A1, DE 10 2018 110 155 A1, DE 10 2018 113 644 A1, DE 10 2018 122 651 A1, DE 10 2020 107 555 A1, DE 10 2020 106 712 A1, DE 10 2020 107 558 A1, DE 10 2020 113 828 A1.

Auf die dortigen Beschreibungen, Erläuterungen und Begriffseinhalte der Merkmale wird vorliegend zur Vermeidung von Wiederholungen pauschal Bezug genommen.

Ein Zielgerät im Sinne dieser Patentanmeldung kann beispielsweise eine Waschmaschine, insbesondere eine textile Waschmaschine, weiter insbesondere eine textile gewerbliche Waschmaschine, oder z. B. auch eine Geschirrspülmaschine, eine Bodenreinigungsmaschine, eine Abfüllanlage, eine Autowaschanlage oder ein Swimmingpool sein. Ganz allgemein ist ein Zielgerät im Sinne der vorliegenden Patentanmeldung ein Gerät oder eine Vorrichtung, das mit Medien versorgt werden soll.

Die Zahl der eingangsseitig an die Dosiereinrichtung angeschlossenen Behältnisse, die mit gleichen oder mit unterschiedlichen Medien befüllt sein können, ist beliebig, und hängt von dem Zielgerät und von dem Anwendungszweck und Anwendungsfeld ab.

Ausgangsseitig können ein oder mehrere Zielgeräte an die Dosiereinrichtung angeschlossen sein.

Die erfindungsgemäße Dosiereinrichtung kann eingangsseitig einen Mischverteiler aufweisen. Ein Mischverteiler im Sinne der vorliegenden Patentanmeldung kann Leitungswege schalten und hierzu insbesondere ein Stellglied aufweisen. Beispiele für derartige, auch bei der erfindungsgemäßen Dosiereinrichtung einzusetzende Mischverteiler finden sich in den folgenden Patentanmeldungen der Anmelder:
DE 10 2011 122 921 A1, WO 2013/075692 A2, DE 10 2012 012 913 A1, WO 2014/000726 A2, DE 10 2014 002 560 A1, DE 10 2015 110 862 A1, DE 10 2015 107 976 A1 und DE 10 2018 113 644 A1.

Auch der Inhalt dieser vorliegend aufgeführten Patentanmeldungen der Anmelder wird hiermit in den Offenbarungsgehalt der vorliegenden Patentanmeldung mit eingeschlossen, dies auch zu dem Zwecke, bei Bedarf einzelne oder mehrere der dort offenbarten Merkmale in den Text oder die Ansprüche dieser Patentanmeldung mit aufzunehmen.

Die erfindungsgemäße Dosiereinrichtung weist eine Steuereinheit auf, die mit einer Vielzahl von Sensoren verbunden werden kann. Einer oder mehrere der Sensoren können beispielsweise an einer Sauglanze angeordnet sein, und Informationen über den Füllstand an Medium in dem Behältnis liefern, in dem sich die Sauglanze befindet. Hierzu wird insbesondere verwiesen auf die nachveröffentlichte deutsche Patentanmeldung DE 10 2020 106 712 A1 der Anmelder, die ein Prinzip eines an einer Sauglanze angeordneten Sensors veranschaulicht, wie er zur Verwendung in einer erfindungsgemäßen Dosiereinrichtung geeignet ist. Die Sauglanze kann einen Schwimmerkörper aufweisen, der auf der Mediumoberfläche aufschwimmt und in verschiedenen Positionen unterschiedliche Schalter, die an die Sauglanze angeordnet sind, betätigt. Der an der Sauglanze angeordnete Sensor umfasst eine Messelektronik, die bei unterschiedlichen Schalterstellungen - entsprechend unterschiedlichen Schwimmerpositionen - unterschiedliche Sensorwerte ausgibt, und beispielsweise unterschiedliche messbare Stromaufnahmen durch die Messelektronik zur Folge hat.

Von der Erfindung sind z. B. Sensoren umfasst, die mit einer Betriebsspannung oder einem Betriebsstrom versorgt werden. Von der Erfindung sind auch Sensoren umfasst, die betriebsspannungsfrei betrieben werden können.

Von der Erfindung sind weiter Sensoren umfasst, die mit der Steuereinheit über zwei elektrische Leiter oder über mehr elektrische Leiter (beispielsweise über drei oder vier elektrische Leiter) verbunden werden können.

Die Verbindung zwischen Steuereinheit und Sensor kann beispielsweise auch eine Funkstrecke umfassen, oder eine Strecke, die sich einer optischen Signalübertragung bedient.

Die Verbindung zwischen Steuereinheit und Sensor ist insbesondere eine analoge elektrische Leitung, auf der Spannungen oder Strom übertragen werden können.

Von der Erfindung ist auch umfasst, wenn die Verbindung zwischen Steuereinheit und Sensor eine Datenübertragungsstrecke umfasst. Beispielsweise kann der Sensor auch eine digitale Schnittstelle umfassen, und an der Steuereinheit z. B. eingangsseitig einer Messschaltung, kann gleichermaßen eine digitale Schnittstelle angeordnet sein.

Von der Erfindung sind ganz allgemein Sensoren umfasst, die Ströme, Spannungen, Drücke, Leitfähigkeiten, insbesondere elektrische Leitfähigkeiten, Durchflüsse oder Durchflussmengen, Temperaturen oder andere physikalische Größen oder Informationen darüber ausgeben oder unmittelbar oder mittelbar messen können. Insbesondere sind von der Erfindung Sensoren umfasst, die elektrisch auswertbare Größen, wie z. B. Spannung oder Ströme ausgeben oder ausgebbar vorhalten.

Als Sensor im Sinne der vorliegenden Patentanmeldung werden sowohl einfach aufgebaute elektrische oder elektronische Bauelemente oder Messwertgeber verstanden, als auch komplizierte, z. B. eine gesonderte Messelektronik umfassende Detektoren oder Messeinrichtungen.

Ein Sensor im Sinne der vorliegenden Patentanmeldung kann eine physikalische Größe oder aber auch unterschiedliche physikalischen Größen messen oder überwachen. Beispielsweise sind von der Erfindung Sensoren umfasst, die eine Messschaltung umfassen, an die ein erster Teilsensor und auch ein zweiter Teilsensor angeschlossen ist. Der erste Teilsensor kann beispielsweise einen Füllstand an Medium in dem Behältnis messen und der zweite Teilsensor kann beispielsweise die Temperatur des Mediums in dem Behältnis messen. Die Messelektronik kann die Informationen von den unterschiedlichen Teilsensoren erfassen, verarbeiten und über eine Verbindungsleitung an die Dosiereinrichtung übermitteln.

Ein Sensor im Sinne der vorliegenden Patentanmeldung kann auch ein Schwimmerschalter einer Sauglanze sein, der eine Leerstandsmeldung ausgeben kann, wenn das Medium in dem Behältnis aufgebraucht ist. Ein solcher Sensor kann beispielsweise auch einen oder mehrere Reed-Schalter umfassen. Ein Sensor, der beispielsweise über eine zweiadrige Verbindungsleitung mit der Steuereinheit unter Zwischenschaltung der Schalteinrichtung verbindbar ist, kann beispielsweise auch einen Kurzschluss oder eine Unterbrechung der Leitung als Messwert ausgeben. Entsprechende Signale können von der Steuereinheit bzw. von einer der Steuereinheit zugehörigen Messschaltung verarbeitet und verstanden oder interpretiert werden.

Als Schalteinrichtung kommen beispielsweise Mehrfachschalter in Betracht, die mehrere Eingänge und einen Ausgang besitzen. Insbesondere kommen als Schalteinrichtung im Sinne der Erfindung integrierte Multiplexerbausteine, wie beispielsweise von Texas Instruments erhältliche Prozessoren, wie TMUX1209 oder CD4052B-MIL, oder andere vergleichbare Bauelemente in Betracht.

Auch andere Arten von Schalteinrichtungen, z. B. Analogschalter, Analogmultiplexer oder dergleichen sind von der Erfindung mit umfasst.

Insbesondere werden entsprechende Multiplexer fachmännisch auch als MUX-Bauelemente bezeichnet.

Gemäß der Erfindung dient die Dosiereinrichtung zur Dosierung und Zuführung von Medien über Fluidleitungen zu wenigstens einem Zielgerät. Dabei können insbesondere unterschiedliche Medien sukzessive einem Zielgerät oder mehren Zielgeräten zugeführt werden.

Die Steuereinheit kann insbesondere Dosierprozesse initiieren. Beispielsweise enthält sie Informationen von dem Zielgerät, also z. B. eine Dosieranforderung, oder initiiert selbstständig oder benutzergesteuert einen Dosierprozess. Hierzu kann sie z. B. vor oder bei Durchführung eines Dosierprozesses prüfen, ob ein bestimmtes Medium eingangsseitig angeschlossen ist. Ein positives Prüfergebnis vorausgesetzt, kann nachfolgend eine Pumpe, z. B. eine Schlauchpumpe, über eine bestimmte Zeit oder eine vorbestimmte Drehzahl angesteuert werden, und so ein vorbestimmtes Volumen an Medium aus dem Behältnis heraus und hin zu dem Zielgerät gefördert werden.

Bei einer Ausführungsform der Erfindung ist die Dosiereinrichtung eingangsseitig mit einer Vielzahl von Sensoren verbunden, die eine Messung des Füllstandes an Medium in dem Behältnis zulassen.

Von der Erfindung sind aber auch andere Sensoren umfasst, die andere Parameter messen, beispielsweise Drücke oder Leitfähigkeiten. Die Sensoren können auch ausgangsseitig der Dosiereinrichtung, z. B. am Zielgerät oder an Leitungen angeordnet sein.

Dadurch, dass erfindungsgemäß eine Schalteinrichtung vorgesehen ist, mit der jeweils Sensoren zur Bewerkstelligung einer Verbindung mit der Steuereinheit auswählbar sind, kann der elektrotechnische und konstruktive Aufwand in der Dosiereinrichtung erheblich reduziert bzw. kleingehalten werden: Es ist für eine Zahl von n Sensoren nicht erforderlich, eine n-fache Anordnung von Messelektronik und eine n-fache Anordnung von Versorgungseinheiten vorzusehen, sondern es genügt eine Anordnung einer einzigen Messschaltung und einer einzigen Versorgungseinheit und einer einzigen Auswerteeinheit. Über die Schalteinrichtung kann jeweils ein ausgewählter Sensor mit der Steuereinheit verbunden werden.

Insbesondere dort, wo eine Messung und Überwachung von Parametern nicht zeitkritisch ist, sondern nur auf Abruf erfolgen muss oder regelmäßig, z. B. auch kontinuierlich oder zyklisch, periodisch erfolgen kann, kann erfindungsgemäß der Konstruktionsaufwand der Dosiereinrichtung erheblich reduziert bzw. gering gehalten werden.

Von der Erfindung ist auch umfasst, wenn mehrere Schalteinrichtungen in Reihe oder parallel geschaltet sind oder z. B. eine kaskadenartige Anordnung von mehreren Schalteinrichtungen vorgesehen ist.

Die Steuereinheit ist erfindungsgemäß mit einem auswählbaren Sensor verbindbar. Von dem Sensor können Messwerte oder Informationen abgefragt werden. Die Dosiereinrichtung kann den Dosierprozess unter Berücksichtigung der von dem Sensor empfangenen Information oder Messwerte durchführen. Sobald Messwerte empfangen werden, kann die Steuereinheit die Messwerte unter Zuhilfenahme einer Messschaltung und/oder einer Auswerteeinheit oder einer Auswerteelektronik verarbeiten und zuordnen.

Hierzu kann die Steuereinheit mit einer internen oder externen Messschaltung ausgestattet sein und mit einer internen oder externen Auswerteeinheit oder Auswerteelektronik ausgestattet sein.

Weiter kann die Steuereinheit mit einer internen oder externen Schaltersteuerung für die Schalteinrichtung ausgestattet sein, um die Schalteinrichtung ansprechen zu können.

Die Dosiereinrichtung kann extern von einem Zielgerät angeordnet sein. Bei einer alternativen Ausgestaltung der Erfindung ist die Dosiereinrichtung in das Zielgerät integriert oder unmittelbar in oder an das Zielgerät angebunden.

Von der Erfindung ist auch umfasst, wenn die Schalteinrichtung Bestandteil der Dosiereinrichtung ist oder extern der Dosiereinrichtung angeordnet ist und dieser zugeordnet ist.

Gemäß einer vorteilhaften Ausgestaltung der Erfindung ist der Steuereinheit eine Schaltersteuerung zugeordnet, mit der die Schalteinrichtung betätigbar ist. Die Schaltersteuerung kann Bestandteil der Steuereinheit sein oder gesondert von dieser angeordnet, aber mit der Steuereinheit verbunden sein. Die Schaltersteuerung kann die Schalteinrichtung z. B. derartig betätigen, dass jeweils ein ausgewählter einer Mehrzahl von Eingängen der Schalteinrichtung mit einem Ausgang der Schalteinrichtung verbunden ist.

Gemäß einer vorteilhaften Ausgestaltung der Erfindung gehört zu der Steuereinheit eine Messschaltung. Dies bedeutet, dass der Steuereinheit eine Messschaltung zugeordnet ist. Die Schalteinrichtung kann hierzu jeweils einen der Sensoren mit der Messschaltung verbinden. Die Messschaltung kann Bestandteil der Steuereinheit sein. Alternativ kann die Messschaltung gesondert von der Steuereinheit angeordnet sein oder mit der Steuereinheit verbunden sein.

Die Messschaltung kann beispielsweise eine Strommessung durchführen. Alternativ kann auch eine Spannungsmessung oder eine Impuls-Messung oder eine Impulsbreiten-Messung oder eine Frequenzmessung oder eine andere geeignete Art einer Messung eines elektrischen Signals vorgenommen werden.

Besonders vorteilhaft ist vorgesehen, wenn die Messschaltung als Strommessschaltung ausgebildet ist. Dabei kann insbesondere auf eine genormte Stromschnittstelle von 4 mA bis 20 mA zurückgegriffen werden. Auch andere Schnittstellen, insbesondere andere genormte Schnittstellen, können zum Einsatz kommen.

Der Sensor ist vorteilhafterweise derartig ausgebildet, dass er eine entsprechende Schnittstelle bereitstellt, wobei an der entsprechenden Schnittstelle die Schalteinrichtung anschließbar ist. Für den Fall, dass die Schaltersteuerung einen bestimmten Eingang der Schalteinrichtung ausgewählt hat, wird das Schnittstellensignal, das an diesem Eingang anliegt, unmittelbar an die Steuereinheit oder unmittelbar an die der Steuereinheit zugeordnete Messschaltung durchgeleitet.

Gemäß einer weiteren vorteilhaften Ausgestaltung der Erfindung gehört zu der Steuereinheit eine Versorgungseinheit. Dies bedeutet, dass eine Versorgungseinheit ein Bestandteil der Steuereinheit ist oder dieser zugeordnet ist. Die Versorgungseinheit kann insbesondere von einer Spannungsversorgungseinheit oder einer Stromversorgungseinheit bereitgestellt sein.

Mittels der Schalteinrichtung kann jeweils einer der Sensoren mit der Versorgungseinheit verbunden werden.

Für den Fall, dass die Messschaltung eine Strommessschaltung ist, kann die Verbindungsleitung zwischen der Messschaltung und dem ausgewählten Sensor eine Verbindungsleitung sein, die von nur zwei Leitern bereitgestellt ist. Hier kann z. B. vorgesehen sein, dass die Strommessschaltung zugleich auch den Versorgungsstrom bereitstellt.

Von der Erfindung sind aber auch Dosiereinrichtungen umfasst, bei denen die Steuereinheit mit den Sensoren über eine Verbindungsleitung mit mehr als zwei Leitern, beispielsweise drei Leitern oder vier Leitern, verbunden ist.

Entsprechend kann die Schalteinrichtung z. B. derartig ausgebildet sein, dass von ihr parallel mehrere Leiter geschaltet werden, beispielsweise einen ersten Leiter, der einen Sensorausgang mit der Messschaltung verbindet und zugleich einen weiteren Leiter, der einen Versorgungsspannungseingang am Sensor mit einer Versorgungseinheit der Steuereinheit verbindet.

In diesem Zusammenhang sei der Vollständigkeit halber erwähnt, dass die Versorgungseinheit gesondert von der Messschaltung ausgebildet sein kann oder Bestandteil der Messschaltung sein kann.

Gleichermaßen kann die Versorgungseinheit zu der Steuereinheit gehören, und z. B. Bestandteil der Steuereinheit sein, oder gesondert von der Steuereinheit angeordnet aber mit dieser verbunden sein.

Von der Erfindung ist bei einer vorteilhaften Ausgestaltung der Erfindung weiter umfasst, dass die Schalteinrichtung regelmäßig oder auf Abruf betätigbar ist.

In diesem Zusammenhang ist anzumerken, dass die Steuereinheit der erfindungsgemäßen Dosiereinrichtung über eine Schalteinrichtung mit Sensoren verbunden ist, deren Messwerte oder Ausgabewerte nicht hoch zeitkritisch sind. Beispielsweise genügt es, bei der Durchführung eines Dosierprozesses in Erfahrung zu bringen, ob ein bestimmtes, für den Dosierprozess benötigtes Medium noch vorhanden ist. In diesem Fall genügt es, kurz vor Durchführung des Dosierprozesses eine Überprüfung des Füllstandes des Mediums durchzuführen, also auf Abruf.

Die Schalteinrichtung kann aber auch regelmäßig, insbesondere zyklisch, sämtliche angeschlossenen Sensoren sukzessive mit der Steuereinheit verbinden. Für den Fall, dass die Gesamtdauer einer Prüfung des Messwertes von einem bestimmten Sensor beispielsweise eine Zeitdauer T verlangt, kann jeweils nach Ablauf einer Zeitdauer T, gegebenenfalls unter Berücksichtigung von Wartezeiten, die Schalteinrichtung erneut von der Schaltersteuerung angesprochen werden, um einen weiteren der Sensoren mit der Steuereinheit zu verbinden.

Dabei kann die Steuereinheit die Schalteinrichtung über die Schaltersteuerung derart ansprechen, dass immer nur solche Schalterstellungen der Schalteinrichtung erreicht werden, die einen belegten Eingang der Schalteinrichtung mit dem Ausgang der Schalteinrichtung verbinden, also einen Eingang, an dem auch ein Sensor angeschlossen ist.

Die Steuereinheit kann z. B. ein Anschließen eines Behältnisses, z. B. ein Anschließen einer Sauglanze, an einem bestimmten Anschluss vermerken, dies auch, damit sie weiß, welcher Eingang mit welchem Medium belegt ist.

Gemäß einer weiteren vorteilhaften Ausgestaltung der Erfindung ist wenigstens einer der Sensoren zur Überwachung oder zur Überprüfung eines Füllstandes an Medium in einem Behältnis ausgebildet. Der Sensor kann beispielsweise auch eine Messelektronik umfassen. Insbesondere kann der Sensor an einer Sauglanze angeordnet sein.

Von der Erfindung sind auch alternative Ausführungsbeispiele umfasst, bei denen die Sensoren zur Überwachung anderer physikalischer Größen dienen.

Bei einer vorteilhaften Ausgestaltung der Erfindung umfasst eine von der Schalteinrichtung ansprechbare Verbindungsleitung zwischen der Steuereinheit und dem Sensor nur zwei Leiter. Bei einer Variante der Erfindung umfasst die Verbindungsleitung mehr als zwei Leiter, z. B. drei Leiter oder vier Leiter.

Gemäß einer weiteren vorteilhaften Ausgestaltung der Erfindung ist der Steuereinheit eine Auswertelektronik oder Auswerteeinheit zugeordnet, mit der von dem Sensor erhaltene Informationen oder von dem Sensor erhaltene Messwerte verarbeitbar oder auswertbar sind.

Die Auswerteelektronik kann Bestandteil der Steuereinheit sein oder gesondert von der Steuereinheit angeordnet aber mit dieser verbunden sein.

Gemäß einer weiteren vorteilhaften Ausgestaltung der Erfindung umfasst die Schalteinrichtung einen Analogschalter oder mehrere Analogschalter oder einen Analogmultiplexer oder mehrere Analogmultiplexer. Auch andere Schalteinrichtungen, die mehrere Eingänge und einen Ausgang aufweisen, und einen ansprechbaren Schalter aufweisen, der einen der Eingänge mit dem Ausgang verbindet, sind von der Erfindung umfasst.

Gemäß einer weiteren vorteilhaften Ausgestaltung der Erfindung sind wenigstens zwei der Sensoren an Sauglanzen angeordnet. Von der Erfindung sind auch Ausführungsbeispiele umfasst, bei denen die Sensoren an der Dosiereinrichtung, z. B. an den Fluidleitungen angeordnet sind, oder gesondert von der Dosiereinrichtung, beispielsweise auch ausgangsseitig der Dosiereinrichtung, z. B. an dem Zielgerät, angeordnet sind.

Gemäß einer vorteilhaften Ausgestaltung der Erfindung ist vorgesehen, dass wenigstens ein Sensor eine Messelektronik umfasst.

Die Erfindung bezieht sich des Weiteren auf ein Verfahren nach Anspruch 12.

Diesem liegt die Aufgabe zugrunde, ein Verfahren anzugeben, mit dem bei einfacher Konstruktion der Dosiereinrichtung eine Möglichkeit bereitgestellt wird, Messwerte von einer Vielzahl von Sensoren zu berücksichtigen.

Die Erfindung löst diese Aufgabe mit den Merkmalen des Anspruches 12.

Zur Vermeidung von Wiederholungen wird bezüglich Anspruch 12 vollumfänglich auf die obigen Ausführungen verwiesen und zurückgegriffen, die zu Anspruch 12 analog gelten.

Die Erfindung betrifft gemäß einem weiteren Aspekt eine Schalteinrichtung nach Anspruch 14.

Die Aufgabe der Erfindung besteht darin, eine Schalteinrichtung anzugeben, mit der eine Dosiereinrichtung, die mit einer Mehrzahl von Sensoren verbindbar ist, auf eine konstruktiv einfache Bauweise realisierbar ist.

Die Erfindung löst diese Aufgabe mit den Merkmalen des Anspruches 14.

Zur Vermeidung von Wiederholungen wird bezüglich Anspruch 14 vollumfänglich auf die obigen Ausführungen verwiesen und zurückgegriffen, die zu Anspruch 14 analog gelten.

Die Erfindung bezieht sich gemäß einem weiteren Aspekt auf eine Dosiereinrichtung nach Anspruch 15.

Der Erfindung liegt ebenfalls die Aufgabe zugrunde, eine Dosiereinrichtung der gattungsgemäßen Art derartig weiterzubilden, dass sie bei einfacher Bauweise eine Möglichkeit bereitstellt, Messwerte oder Informationen einer Vielzahl von Sensoren zu berücksichtigen.

Die Erfindung löst diese Aufgabe mit den Merkmalen des Anspruches 15.

Das Prinzip der Erfindung besteht im wesentlichen darin, dass an der Sauglanze eine Messelektronik angeordnet ist, mit der Messwerte von einem Sensor oder von mehreren unterschiedlichen Teilsensoren aufgenommen werden können. Es kann sich bei dem Sensor bzw. den Teilsensoren um Detektionseinrichtungen handeln, die eine Information über einen Füllstand erfassen können, z. B. ein Schwimmerschalter, oder aber auch um andere Teilsensoren, die z. B. eine Temperatur des Mediums in dem Gebinde messen können. Die Messelektronik an der Sauglanze wird über eine Spannungsversorgungsleitung von der Dosiereinrichtung mit Betriebsspannung versorgt. Die Messelektronik kann die Informationen über die von den Teilsensoren erhaltenen Messwerte, also beispielsweise eine Information über den Füllstand und/oder eine Information über die Temperatur, auf die Spannungsversorgungsleitung aufmodulieren und über die Spannungsversorgungsleitung an die Dosiereinrichtung übermitteln. Damit wird die Möglichkeit bereitgestellt, über die vorhandenen Betriebsspannungs- oder Versorgungsleitungen, die ohnehin zur Versorgung der Messelektronik an der Sauglanze vorgesehen sein müssen, auch Informationen über die erhaltenen Messwerte zu übermitteln. Eine Aufmodulation der Informationen kann beispielsweise über eine Spannungsmodulation oder eine Strommodulation erfolgen. Besonders vorteilhaft ist eine Lastmodulation. Es kann aber auch auf andere, an sich bekannte, Powerline-Verfahren zurückgegriffen werden, um die Informationen auf die erhaltene Versorgungsspannung aufzumodulieren. Powerline-Modulations-Verfahren zur Informationsübermittlung sind hinreichend bekannt.

Es ist im Stand der Technik bislang nicht vorgesehen, dass die zwischen einer Sauglanze und einer Dosiereinrichtung vorhandenen Versorgungsspannungsleitungen auch zur Informationsübermittlung verwendet werden, um die Zahl an Leitern gering zu halten.

Die Messschaltung kann beispielsweise Anschlüsse für unterschiedliche Sensoren umfassen, z. B. für einen von einem Schwimmerschalter bereitgestellten Teilsensor und einen Anschluss für einen Temperatursensor.

Auch weitere Sensoren oder Teilsensoren können an die Messelektronik angeschlossen sein.

An der Dosiereinrichtung ist vorteilhafterweise eine Auswerteelektronik vorgesehen, die die über die Spannungsversorgungsleitung erhaltenen Informationen erkennen und verarbeiten kann. So kann beispielsweise im Falle einer Lastmodulation vorgesehen sein, dass unter Zuhilfenahme eines Shunt-Widerstandes von der Auswerteelektronik eine Spannungsdifferenz gemessen und erkannt wird.

Gemäß einer vorteilhaften Ausgestaltung der Erfindung ist vorgesehen, dass die Steuereinheit der Dosiereinrichtung mit einer Mehrzahl von Sauglanzen verbindbar ist, wobei der Steuereinheit eine Schalteinrichtung zugeordnet ist, mit der jeweils eine der Sauglanzen zur Verbindung mit der Steuereinheit auswählbar ist.

Gemäß einer weiteren vorteilhaften Ausgestaltung der Erfindung ist vorgesehen, dass die Messelektronik die Informationen auf die Spannungsversorgungsleitung aufmoduliert.

Gemäß einer weiteren vorteilhaften Ausgestaltung der Erfindung ist vorgesehen, dass die Informationen mittels Lastmodulation über die Spannungsversorgungsleitung übermittelt werden.

Gemäß einer weiteren vorteilhaften Ausgestaltung der Erfindung ist vorgesehen, dass an der Dosiereinrichtung eine Messschaltung angeordnet ist, mit der die von der Messelektronik erhaltenen Informationen auswertbar sind.

Besonders vorteilhaft kann vorgesehen sein, dass die Lastmodulation über unterschiedliche Stromniveaus erreicht wird, beispielsweise über zwei unterschiedliche Stromniveaus, wobei deren Abfolge oder Dauer der Stromniveaus, nach Art einer Pulsbreitenmodulation, eine eindeutige Informationsbestimmung zulässt.

Weitere Vorteile ergeben sich aus den nicht zitierten Unteransprüchen sowie aus der nachfolgenden Beschreibung der in den Zeichnungen dargestellten Ausführungsbeispiele. Hierin zeigen.
- Fig. 1: in einer schematischen, teilgeschnittenen, blockschaltbildartigen Ansicht ein erstes Ausführungsbeispiel einer erfindungsgemäßen Dosiereinrichtung, die eingangsseitig über zwei Sauglanzen an zwei Behältnisse und ausgangsseitig an ein von einer Waschmaschine bereitgestelltes Zielgerät angeschlossen ist,
- Fig. 2: die Steuereinheit der Dosiereinrichtung nach Fig. 1 in einer vergrößerten blockschaltbildartigen, schematischen Prinzipdarstellung, wobei der Übersichtlichkeit halber einzelne Elemente der Dosiereinrichtung weggelassen worden sind,
- Fig. 3: ein Ausführungsbeispiel einer erfindungsgemäßen Dosiereinrichtung mit einer Steuereinheit in einer blockschaltbildartigen Prinzip-Darstellung unter Veranschaulichung einer Schalteinrichtung, wobei der Übersichtlichkeit halber einzelne Elemente der Dosiereinrichtung weggelassen worden sind,
- Fig. 4: ein weiteres Ausführungsbeispiel einer erfindungsgemäßen Dosiereinrichtung mit einer blockschaltbildartigen, schematischen Prinzipdarstellung der Steuereinheit, wobei mehrere Schalteinrichtungen kaskadenartig in Reihe geschaltet sind, wobei der Übersichtlichkeit halber einzelne Elemente der Dosiereinrichtung weggelassen worden sind,
- Fig. 5: ein weiteres Ausführungsbeispiel einer erfindungsgemäßen Dosiereinrichtung in einer Darstellung gemäß Fig. 1, wobei ausgangsseitig eine zweite Mischverteilereinrichtung angeordnet ist, und wobei zwei Zielgeräte in Form von zwei Waschmaschinen dargestellt sind,
- Fig. 6: ein weiteres Ausführungsbeispiel einer erfindungsgemäßen Dosiereinrichtung in einer Darstellung gemäß Fig. 3, wobei die Schalteinrichtung im Sinne einer gleichzeitigen Schaltung von zwei Schaltwegen betätigbar ist,
- Fig. 7: in einer Darstellung gemäß Fig. 1 ein weiteres Ausführungsbeispiel einer erfindungsgemäßen Dosiereinrichtung, bei der an den beiden dargestellten Sauglanzen jeweils unterschiedliche Teilsensoren angeschlossen sind,
- Fig. 8: in einer blockschaltbildartigen Darstellung schematisch die Messschaltung einer Sauglanze der Dosiereinrichtung der Fig. 7 mit unterschiedlichen Teilsensoren,
- Fig. 9: in einer schematischen Darstellung den zeitlichen Verlauf unterschiedlicher Stromniveaus, die von der Messschaltung auf die Spannungsversorgungsleitung aufgezwungen werden, und
- Fig. 10: in einer schematischen blockschaltbildartigen Darstellung ähnlich der Darstellung der Fig. 3 eine Auswerteschaltung an der Dosiereinrichtung zur Verwendung mit einer Messelektronik gemäß Fig. 8.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

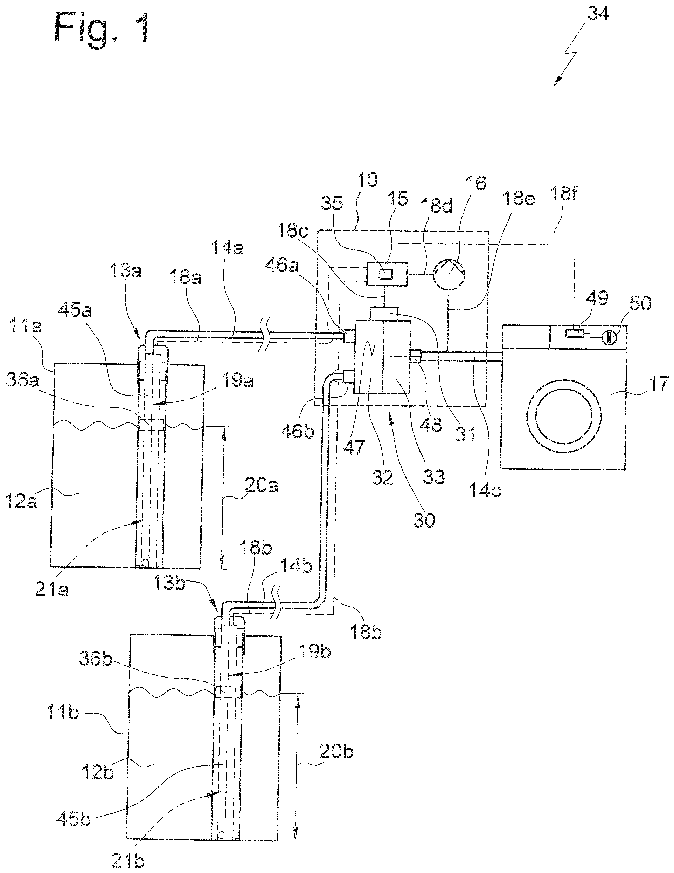

Ausweislich der Fig. 1 soll zunächst ein erstes Ausführungsbeispiel einer erfindungsgemäßen Dosiereinrichtung 10 beschrieben werden:
Die Dosiereinrichtung 10 ist Bestandteil eines Systems 34 zur Dosierung von Medien.

Gemäß Fig. 1 ist die Dosiereinrichtung 10 eingangsseitig mit mehreren Behältnissen verbunden. Bei dem Ausführungsbeispiel der Fig. 1 sind beispielhaft für eine beliebige Anzahl von Behältnissen ein erstes Behältnis 11a und ein zweites Behältnis 11b gezeigt. In dem Behältnis 11a befindet sich Medium 12a mit einem Füllstand 20a. In dem Behältnis 11b befindet sich ein anderes oder gleiches Medium 12b mit dem Füllstand 20b.

In dem Behältnis 11a, 11b ist jeweils eine Sauglanze 13a, 13b angeordnet, die mit ihrem Fußbereich auf einen Boden des Behältnisses aufsetzt oder an diesen herangebracht ist. In der Sauglanze 13a, 13b findet sich jeweils eine Saugleitung 45a, 45b, die im Bereich eines Kopfes der Sauglanze 13a, 13b in eine Fluidleitung14a, 14b übergeht.

Die beiden Fluidleitungen 14a, 14b führen zu Einlässen 46a, 46b an einer Mischverteileinrichtung 30.

Die Mischverteileinrichtung 30 umfasst gemäß Fig. 1 eine Eingangsscheibe 32 und eine Ausgangsscheibe 33, die unter Zuhilfenahme eines Motors 31 zueinander relativ um eine Drehachse 47 drehbar sind. Infolge einer Drehung der Eingangsscheibe 32 relativ zur Ausgangsscheibe 33 wird jeweils einer der Einlässe 46a, 46b mit dem Auslass 48 kommunikativ verbunden.

Der Auslass 48 der Mischverteileinrichtung 30 ist über eine weitere Fluidleitung 14c mit dem Zielgerät 17 verbunden. Bei dem Ausführungsbeispiel der Fig. 1 ist das Zielgerät 17 von einer Waschmaschine bereitgestellt.

Die Dosiereinrichtung 10 umfasst eine Steuerung 15, die über eine Verbindungsleitung 18d mit einer Pumpe 16 verbunden ist. Die Pumpe 16 kann z. B. ein Schlauchpumpe oder eine andere geeignete Art von Pumpe sei. Die Pumpe 16 ist über eine Wirkleitung 18e mit der Fluidleitung 14c, ausgangsseitig der Mischverteileinrichtung 30, verbunden.

Die Steuerung 15 ist des Weiteren über eine Steuerleitung oder Verbindungsleitung 18f mit einer Steuerung 49 des Zielgerätes 17 verbunden. Wenn eine nicht dargestellte Bedienperson an dem Zielgerät 17 durch Betätigung des Programmwahlschalters 50 ein bestimmtes Programm einstellt, kann die Steuerung 49 des Zielgerätes 17 zu einem vorgegebenen Zeitpunkt eine vorherbestimmte Menge an Medium, z. B. eine bestimmte Chemikalie, von der Dosiereinrichtung 10 anfordern. Dieses Anforderungssignal erhält die Steuerung 15 der Dosiereinrichtung 10 über die Leitung 18f.

In Folge des Erhaltes eines Anforderungskommandos kann die Steuereinheit 15 zunächst über die Verbindungsleitungen 18a oder 18b eine Prüfung vornehmen, ob in dem entsprechenden Behältnis 11a, 11b eine ausreichende Menge an Medium 12a, 12b enthalten ist bzw. ob der Füllstand 20a, 20b ausreichend hoch ist.

Hierzu ist an jeder Sauglanze 13a, 13b eine Messelektronik 21a, 21b vorgesehen, die den Füllstand detektieren kann. Die Messelektronik 21a, 21b ist in Fig. 1 lediglich angedeutet. Die Sauglanze 13a, 13b umfasst jeweils einen Schwimmerkörper 36a, 36b, der auf der Oberfläche des Mediums 12a, 12b aufschwimmt und in unterschiedlichen Positionen relativ zu der Sauglanze 13a, 13b unterschiedliche, in Fig. 1 nicht dargestellte, Schalter der Messelektronik 21a, 21b betätigt. Entsprechend unterschiedlicher Schalterstellungen weist die Sauglanze 13a, 13b beispielsweise unterschiedliche Widerstandswerte oder unterschiedliche Stromaufnahmewerte auf, wenn die Messelektronik 21a, 21b mit Strom oder Spannung von der Dosiereinrichtung 10 beaufschlagt wird.

Die Sauglanze 13a, 13b umfasst somit jeweils einen Sensor 19a, 19b, der eine Aussage über den Füllstand 20a, 20b in dem Behältnis 11a, 11b zulässt. Der Sensor 19 umfasst bei dem Ausführungsbeispiel der Fig. 1 eine Messelektronik 21.

Wenn sich die Steuerung 15, insbesondere unter Zuhilfenahme eines Mikroprozessor 35 vergewissert hat, dass eine ausreichende Menge an Medium 12a, 12b in dem Behältnis 11a, 11b vorhanden ist, kann der Dosierprozess durchgeführt werden.

In diesem Zusammenhang ist zunächst anzumerken, dass die Steuerung 15 über die elektrische Verbindungsleitung 18c z. B. einen Motor 31 für die Mischverteilerrichtung 30 ansteuern kann und die Eingangsscheibe 32 und die Ausgangsscheibe 33 relativ zueinander in eine bestimmte Drehposition versetzen kann, um eine entsprechende kommunikative Verbindung zwischen dem entsprechenden Einlass 46a, 46b und dem entsprechenden Auslass 48 zu bewerkstelligen. Auf diese Weise kann das richtige, angeforderte Medium gefördert werden. Sodann kann von der Steuereinheit 15 die Pumpe 16 angesprochen werden. Die Pumpe 16 kann über eine bestimmte Zeitdauer oder über eine bestimmte Anzahl von Umdrehungen betrieben werden und auf der Ausgangsseite der Mischverteilereinrichtung 30 einen Unterdruck erzeugen und auf diese Weise eine vorgegebene Menge an Medium aus dem entsprechenden Behältnis 11a , 11b herausfördern und dem Zielgerät 17 zuleiten.

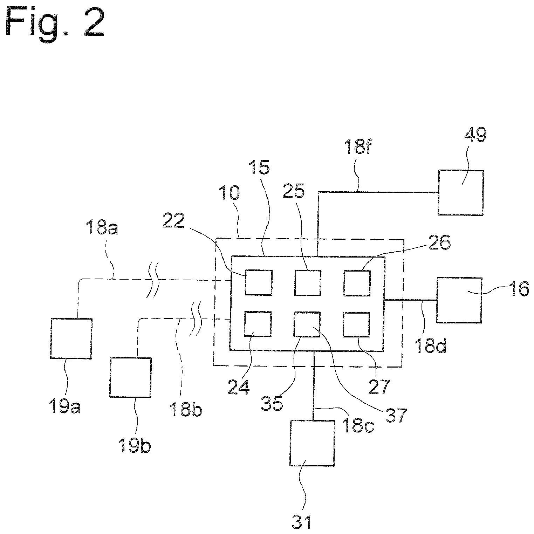

Ausweislich Fig. 2 soll ein Prinzip-Blockschaltbild der Steuerung 15 der Dosiereinrichtung 10 erläutert werden: Man erkennt, dass an die Steuerung 15 zwei Sensoren 19a, 19b, ein Motor 31, eine Pumpe 16 und eine Steuerung 49 des Zielgerätes 17 angeschlossen sind.

Die Steuerung 15 kann von einem Prozessor und/oder von einer Schaltung gebildet sein und ein einziges elektronisches Bauelement oder eine Vielzahl elektronischer Bauelemente umfassen.

Wie in Fig. 2 schematisch dargestellt, können als Bestandteile der Steuerung 15 oder als der Steuereinheit 15 zugehöriges oder zugeordnetes Element, eine Schaltersteuerung 24, eine Messschaltung 25, eine Versorgungseinheit 26, eine Auswerteelektronik oder Auswerteeinheit 27, ein Speicher 37, und bei diesem Ausführungsbeispiel ein mit dem Speicher integral dargestellter Prozessor 35, vorgesehen sein.

Die interne Verschaltung dieser elektronischen Bauelemente 24, 25, 27, 35, 37 oder Teile von Bauelementen ist in Fig. 2 der Übersichtlichkeit halber nicht dargestellt.

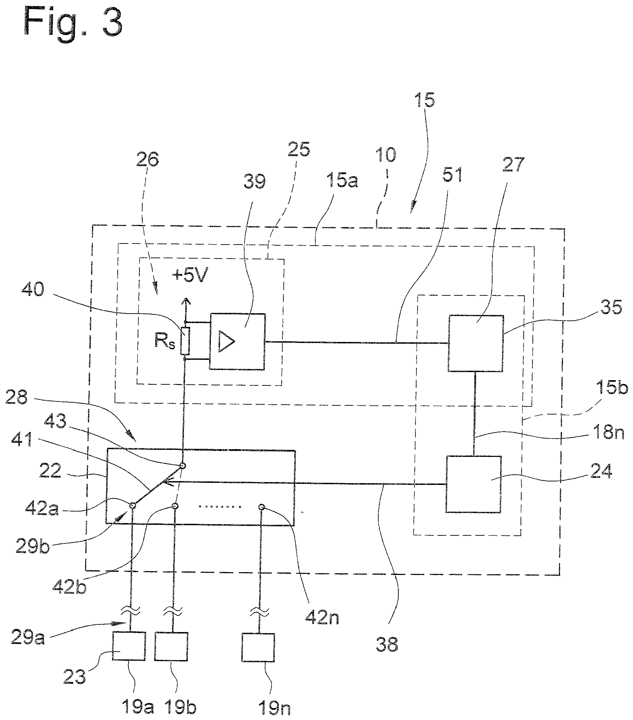

Entscheidend ist, dass die Dosiereinrichtung gemäß Fig. 2 auch eine Schalteinrichtung 22 aufweist. Diese kann - wie in Fig. 2 dargestellt - der Steuereinheit 15 zugeordnet sein, ist dieser allerdings vorgeschaltet. Die Schalteinrichtung 22 kann - wie in Fig. 2 dargestellt - in die Steuereinheit 15 integriert sein, oder alternativ, wie anhand der später zu erläuternden Ausführungsbeispiele der Fig. 3, Fig. 4 und Fig. 6 dargestellt, auch gesondert von der Steuereinheit 15 ausgebildet und mit dieser verbunden sein.

Die Schalteinrichtung 22 ist zwischen den Sensoren 19a, 19b und der Steuereinheit 15 angeordnet.

Soweit die Schalteinrichtung 22 - wie bei dem schematischen Ausführungsbeispiel der Fig. 2 angedeutet - in die Steuereinheit 15 integriert ist, ist sie den übrigen Bauelementen 25, 27, 35 der Steuereinheit 15 vorgeschaltet.

Insbesondere die in Fig. 2 dargestellten Bauelemente der Steuerung, nämlich die Messschaltung 25, dir Auswerteelektronik oder Auswerteeinheit 27und der Prozessor 35, sind nur unter Zwischenschaltung der Schalteinrichtung 22 mit den Sensoren 19a, 19b verbindbar.

Dem Fachmann ist deutlich, dass die Steuereinheit 15 mehrere Prozessoren oder mehrere der vorgenannten Bauelemente oder Schaltungen umfassen kann.

Ausweislich Fig. 3 soll nun bei einem Ausführungsbeispiel der Erfindung anhand eines detaillierten Funktionsschaltbildes die Funktionsweise der erfindungsgemäßen Dosiereinrichtung 10 erläutert werden:
Ausweislich des Ausführungsbeispiels der Fig. 3 umfasst die Steuereinheit 15 einen Prozessor 35, in den eine Auswerteeinheit oder Auswerteelektronik 27 integriert ist.

Der Prozessor 35 ist über eine Verbindungsleitung 51 mit einer Messschaltung 25 verbunden. Die Messschaltung 25 ist als Strommessschaltung ausgebildet und umfasst eine Spannungsversorgungseinheit 26, einen Widerstand 40 und ein Verstärkerelement 39.

Mit dieser Messschaltung 25 kann der an dem Punkt 43 in die Messschaltung einfließende Strom gemessen bzw. verstärkt werden. Über die Leitung 51 wird der verstärkte Strommesswert der Auswerteeinheit 27 zugeführt. Der Prozessor 35 kann diesen Strommesswert verarbeiten.

Die Darstellung der Fig. 3 unterscheidet sich von der Prinzipdarstellung der Fig. 2. Dem Fachmann ist deutlich, dass Auswerteeinheit 27 und Prozessor 35 von unterschiedlichen Bauelementen, wie in Fig. 2 dargestellt, oder von einem Bauelement gemeinsam, wie in Fig. 3 dargestellt, bereitgestellt werden können.

Fig. 3 zeigt mehrere Varianten 15, 15a, 15b einer Steuereinheit: Eine erste Variante 15a einer Steuereinheit sieht vor, dass zu der Steuereinheit 15a die Auswerteelektronik 27, der Prozessor 35 und die Messschaltung 25 gehören. Bei dieser Variante ist eine Schalterstellung 24 gesondert von der Steuereinrichtung 15 ausgebildet und angeordnet, aber mit dieser verbunden. Auch ist bei diesem Ausführungsbeispiel 15a der Steuereinheit eine Schaltereinrichtung 22 gesondert von der Steuereinheit 15a ausgebildet, aber mit dieser verbunden.

Bei einem weiteren, ebenfalls in Fig. 3 angeordneten Ausführungsbeispiel einer erfindungsgemäßen Dosiereinrichtung 10 umfasst die Steuereinrichtung 15b eine Auswerteeinheit 27, einen Prozessor 35 und die Schaltersteuerung 24. Bei diesem Ausführungsbeispiel einer Steuerung 15b ist die Messschaltung 25 gesondert von der Steuereinheit 15b angeordnet, aber über die Leitung 51 mit dieser verbunden.

Die Schalteinrichtung 22 ist gesondert von der Steuereinheit 15b ausgebildet, aber über eine Leitung, nämlich über die Verbindungsleitung zu der Messschaltung 25, mittelbar mit der Steuereinheit 15b verbunden.

Das dritte Ausführungsbeispiel einer Steuereinheit 15 gemäß Fig. 3 umfasst die Messschaltung 25, die Auswerteeinheit 27, den Prozessor 35, die Schaltersteuerung 24 und die Schalteinrichtung 22. Die Sensoren 19a, 19b, 19 sind über die Schalteinrichtung 22 mit den Bauelementen 25, 27 der Steuereinheit 15 verbunden.

Bei dem Ausführungsbeispiel einer Steuereinheit 15 gemäß Fig. 3 ist die Schalteinrichtung 22 in die Steuereinheit 15 integriert, aber einigen Komponenten der Steuereinheit 15, nämlich der Messschaltung 25 und der Auswerteeinheit 27, vorgeschaltet.

Die Dosiereinrichtung 10 umfasst bei dem Ausführungsbeispiel der Fig. 3 eine Schalteinrichtung 22, die nach Art eines Analogmultiplexers ausgebildet ist. Die Schalteinrichtung 22 umfasst einen Ausgang 43 zur Verbindung mit der Messschaltung 25 und mehrere Eingänge 42a, 42b, 42n.

Die Zahl der Eingänge 42a, 42b, 42n ist beliebig.

Die Schalteinrichtung 22 umfasst einen schematisch angedeuteten Schaltweg 41, der über eine Wirkverbindung 38 verlagerbar ist, und der jeweils einen der Eingänge 42a, 42b, 42n mit dem Ausgang 43 verbindet.

Die Wirkverbindung 38 wird von der Schaltersteuerung 24 angesprochen: Über die Wirkverbindung 38 kann die Schaltersteuerung 24 den Schaltweg 41 ändern, und jeweils einen ausgewählten der Eingänge 42a, 42b, 42n mit dem Ausgang der Schalteinrichtung 22 verbinden.

Fig. 3 zeigt eine Schalterstellung der Schalteinrichtung 22 unter Veranschaulichung des Schaltweges 41 in durchgezogenen Linien, in der der Eingang 42a der Schalteinrichtung 22 mit dem Ausgang 43 verbunden ist. Die übrigen Eingänge 42b, 42n sind offen geschaltet.

An den Eingang 42a der Schalteinrichtung 22 ist ein erster Sensor 19a angeschlossen. An dem zweiten Eingang 42b der Schalteinrichtung 22 ist ein zweiter Sensor 19b angeschlossen.

An die übrigen Eingänge ist ebenfalls jeweils ein Sensor angeschlossen. Zur Veranschaulichung ist an dem Eingang 42n der Schalteinrichtung 22 ein Sensor 19n angeschlossen. Die Sensoren 19 sind jeweils nur schematisch dargestellt.

Die Steuereinheit 15 umfasst bei dem Ausführungsbeispiel der Fig. 3 eine Schaltersteuerung 24. Diese kann von dem Prozessor 35 der Steuerung 15 angesprochen werden.

Bei einer Position und Stellung der Schalteinrichtung 22 gemäß der Fig. 3 ist nur der Sensor 19a mit der Messschaltung 25 verbunden. Über die in Fig. 3 dargestellte Schalterstellung ist der Sensor 19a ausgewählt und wird insoweit als ausgewählter Sensor 23 bezeichnet.

Über die Strom-Messschaltung 25 wird der Sensor 19a, 23 mit Strom versorgt und der von dem Sensor 19 aufgenommene Strom wird von der Messschaltung 25 gemessen, verstärkt und der Auswerteeinheit 27 zugeführt.

In der Position gemäß Fig. 3 wird also nur die Sauglanze 13a gemäß Fig. 1 für eine Füllstandsmessung herangezogen.

Ist eine solche Füllstandsmessung erfolgt, kann die Steuereinheit 15 veranlassen, dass über die Schaltersteuerung 24 die Schalteinrichtung 22 angesprochen wird und der Schaltweg 41 aus dem in durchgezogenen Linien dargestellten Zustand gemäß Fig. 3 in einen Zustand überführt wird, der in Fig. 3 in gestrichelten Linien dargestellt ist. Dann verbindet der Schaltweg 41 den Ausgang 43 der Schalteinrichtung mit dem Eingang 42b.

In dieser Position oder in diesem Zustand der Schalteinrichtung 22 wird der Sensor 19b an die Messschaltung 25 angeschlossen. Nun kann die Sauglanze 13b gemäß Fig. 1 für eine Füllstandsmessung eingesetzt werden.

Die Sauglanze 13a ist infolge der Verlagerung des Schalters 41 bzw. der Änderung des Schaltzustandes der Schalteinrichtung 22 nun nicht mehr mit Spannung versorgt bzw. nicht mehr mit der Steuereinheit 15 verbunden.

Die Steuereinheit 15 kann veranlassen, dass sämtliche an die Schalteinrichtung 22 angeschlossenen Sensoren 19a, 19b, 19n regelmäßig oder periodisch abgefragt werden.

Alternativ kann von der Erfindung umfasst werden, dass eine Abfrage der Sensoren nur auf Abruf oder nur bei Bedarf vorgenommen wird.

Die Schalteinrichtung 22 ermöglicht der erfindungsgemäßen Dosiereinrichtung 10, nur eine einzige Messschaltung 25 und nur eine einzige Auswerteeinheit 27 vorzusehen. Gleichermaßen ermöglicht die erfindungsgemäße Dosiereinrichtung 10 eine Bereitstellung einer Steuereinheit 15, die mit einer einzigen Versorgungseinheit 26 auskommt, und doch eine Vielzahl von Sensoren 19a, 19b, 19n sukzessive mit Betriebsspannung versorgen kann bzw. von einer Vielzahl von Sensoren 19a, 19b, 19n Messwerte abfragen kann.

Der Clou liegt also darin, dass immer nur ganz genau einer der Vielzahl von Sensoren 19a, 19b, 19n mit der Steuereinheit 15, 15a, 15b verbunden werden kann. Es genügt daher, nur eine Messschaltung 25 und nur eine Auswerteeinheit 27 vorzusehen.

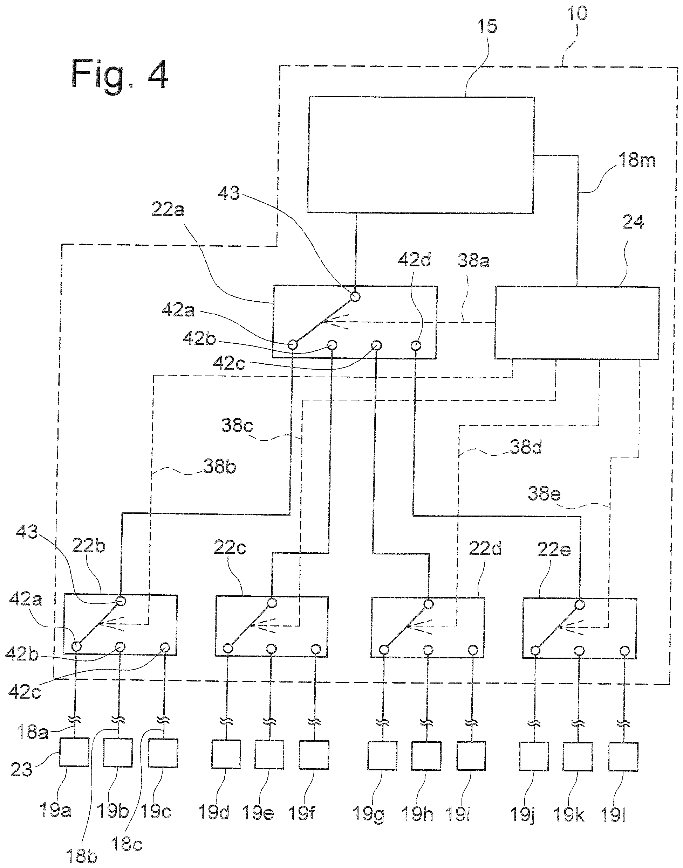

Ein weiteres Ausführungsbeispiel einer erfindungsgemäßen Dosiereinrichtung zeigt Fig. 4.

Hier ist im Unterschied zu Fig. 3 eine kaskadenartige Schaltung von fünf Schalteinrichtungen 22a, 22b, 22c, 22d und 22e vorgesehen.

Insgesamt können zwölf Sensoren 19a, 19b, 19c, 19d, 19e, 19f, 19g, 19h, 19i, 19j, 19k, 19l wahlweise mit der Steuereinheit 15 verbunden werden.

Die Darstellung der Fig. 4 weicht geringfügig von der Darstellung der Fig. 3 ab und ist wiederum nur schematisch zu verstehen: Hier wird als Steuereinheit 15 eine Anordnung verstanden, die der Steuereinheit 15a in Fig. 3 entspricht.

Bei dem Ausführungsbeispiel der Fig. 4 ist die Steuereinheit 15 lediglich schematisch dargestellt. Man erkennt, dass die Steuereinheit 15 auf die Schaltersteuerung 24 über die Verbindungsleitung 18m zugreifen kann, ähnlich wie dies bei dem Ausführungsbeispiel der Fig. 3 vorgesehen ist.

Die Schaltersteuerung 24 kann bei diesem Ausführungsbeispiel über fünf Wirkleitungen 38a, 38b, 38c, 38d, 38e sämtliche Schalteinrichtungen 22a, 22b, 22c, 22d, 22e ansprechen.

Bei dem Ausführungsbeispiel der Fig. 4 befindet sich die Schalteinrichtung 22a mit den übrigen vier Schalteinrichtungen 22b, 22c, 22d, 22e jeweils in einer Reihenschaltung.

Die Schalteinrichtungen 22b, 22c, 22d, 22e sind zueinander parallel geschaltet.

In der Schaltposition der Kaskadenanordnung von Schalteinrichtungen 22a, 22b, 22c, 22d, 22e gemäß Fig. 4 verbindet die Schalteinrichtung 22a in dem in Fig. 4 dargestellten Zustand den Ausgang 43 der Schalteinrichtung 22a mit dem Eingang 42a der Schalteinrichtung 22a.

Zugleich verbindet die Schalteinrichtung 22b den Ausgang 43 der Schalteinrichtung 22b mit dem Eingang 42a der Schalteinrichtung 22b.

In dieser Schaltposition ist also der Sensor 19a der ausgewählte Sensor 23 und über die Kaskadenanordnung von Schalteinrichtungen 22a, 22b mit der Steuerung 15 verbunden.

Die Steuereinheit 15 kann über die Wirkleitung 18m die Schaltersteuerung 24 ansprechen, die ihrerseits über die Wirkleitungen 38a, 38b, 38c, 38d, 38e den Zustand der Kaskadenanordnung von Schaltereinrichtungen 22a, 22b, 22c, 22d, 22e ändern kann und so sukzessive oder wahlweise jeweils einen der anderen der z. B. insgesamt zwölf Sensoren 19b, 19c, 19d, 19e, 19f, 19g, 19h, 19i, 19j, 19k, 19l mit der Steuerung 15 verbinden kann.

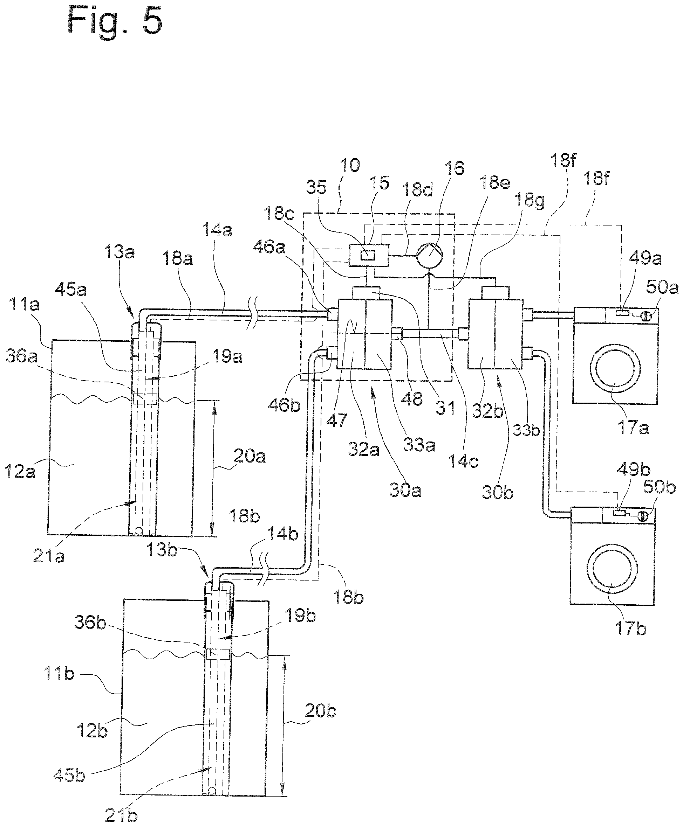

Gemäß Fig. 5 ist ein weiteres Ausführungsbeispiel einer erfindungsgemäßen Dosiereinrichtung 10 in einer Darstellung gemäß Fig. 1 gezeigt. Hier wird deutlich, dass ausgangsseitig des Mischverteilers 30a ein weiterer Mischverteiler 30b angeordnet sein kann. Dieser kann extern der Dosiereinrichtung 10 angeordnet sein, wie dies in Fig. 5 angedeutet ist, oder alternativ auch Bestandteil der Dosiereinrichtung 10 sein.

Der Mischverteiler 30a entspricht dem Mischverteiler 30 der Fig. 1. Der Mischverteiler 30b kann ähnlich aufgebaut sein wie der Mischverteiler 30a, aber geometrisch invertiert angeordnet sein.

Der Mischverteiler 30b weist vorteilhafterweise eine Eingangsscheibe 32b mit nur einem Eingang und eine Ausgangsscheibe 33b mit mehreren Ausgänge auf. Bei dem Ausführungsbeispiel der Fig. 5 sind zwei Ausgänge dargestellt. Bei dem Ausführungsbeispiel der Fig. 5 sind entsprechend zwei Zielgeräte 17a, 17b vorgesehen.

Auch hier kann freilich eine geänderte Anzahl an Zielgeräten 17a, 17b vorgesehen sein.

Die Erfindung ist auch bei Dosiereinrichtungen einsetzbar, die ohne eine Mischverteilereinrichtung auskommen.

Bei den zuvor beschriebenen Ausführungsbeispielen, beispielsweise bei dem Ausführungsbeispiel der Fig. 3, schaltet die Schalteinrichtung 22 jeweils nur einen Leiter. Hier kann beispielsweise die Verbindungsleitung zwischen dem jeweiligen Sensor 19 und der Steuereinheit 15 eine zweiadrige Leitung sein. Über die zweiadrige Leitung kann beispielsweise der Sensor 19 an der Sauglanze 13 mit Betriebsspannung oder Betriebsstrom versorgt werden und zugleich durch die Leitung hindurch der Strom gemessen werden. Genau genommen kann beispielsweise eine Stromaufnahme gemessen werden, die sich in Abhängigkeit von dem Füllstand und der Schwimmerposition durch geänderte Schalterstellungen der Messelektronik der Sauglanze, also des Sensors 19, ändern kann.

Dabei stellt z. B. einer der beiden Leiter eine Masseverbindung oder Dauerspannung bereit, und der jeweilige andere Leiter wird durch die Schalteinrichtung 22 gemäß Fig. 3 geschaltet. Hier ist also ein zweiadriges System von Vorteil.

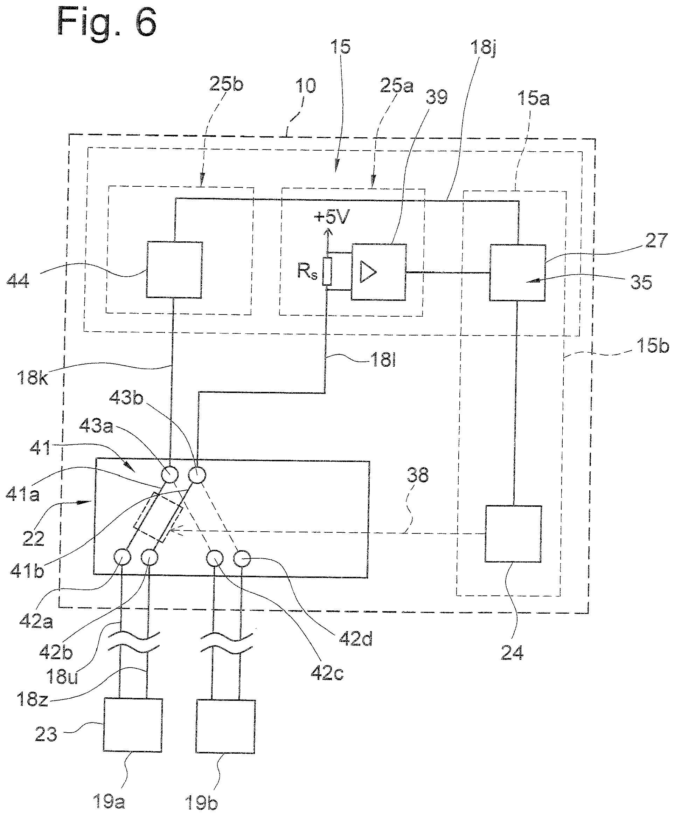

Bei weiteren Ausführungsbeispielen der Erfindung können aber auch Verbindungsleitungen zwischen Sensor 19 und Steuereinheit 15 vorgesehen sein, die mehr als zwei Leiter aufweisen: Bei solchen Ausführungsbeispielen kann gemäß dem Ausführungsbeispiel der Fig. 6 vorgesehen werden, dass die Schalteinrichtung 22 nicht nur eine Leitungsader schaltet, sondern zugleich mehrere Leitungsadern schaltet:
Bei dem Ausführungsbeispiel der Fig. 6 ist eine Schaltvorrichtung 22 vorgesehen, die ausgangsseitig einen ersten Ausgangsanschluss 43a und einen zweiten Ausgangsanschluss 43b aufweist.

Der Ausgangsanschluss 43b kann mit der Messschaltung 25a verbunden sein.

Der Ausgangsanschluss 43a ist ausweislich des Ausführungsbeispiels der Fig. 6 über eine Leitung 18k mit einer Auswerteschaltung 44 verbunden. Die Auswerteschaltung 44 kann wiederum über eine Verbindungsleitung 18j mit der Auswerteeinheit 27 verbunden sein.

Die Auswerteschaltung 44 kann Bestandteil einer zweiten Messschaltung 25b sein. Das Bauelement 25b kann alternativ aber auch eine Versorgungseinheit 26 sein. Entscheidend ist, dass die Schalteinrichtung 22 einen Schaltweg 41 aufweist, der einen ersten Schaltwegpfad 41a und einen zweiten Schaltwegpfad 41b umfasst.

Weiter ist von der Erfindung umfasst, wenn die beiden Ausgänge 43a, 43b - was in Fig. 6 nicht dargestellt ist - über die gesonderten Verbindungsleitungen 18k, 18l mit unterschiedlichen Eingängen einer Messschaltung 25a verbunden sind.

Bei dem Ausführungsbeispiel gemäß Fig. 6 verbindet der erste Schaltwegpfad 41a den Ausgang 43a mit dem ersten Eingang 42a und der zweite Schaltwegpfad 41b verbindet den Ausgang 43b mit dem Eingang 42b.

In diesem Fall ist der Sensor 19a über eine erste Leitung 18u und eine zweite Leitung 18z mit der Steuereinheit 22 verbunden, wobei beide Leitungen 18u, 18z von der Schalteinrichtung 22 zugleich öffenbar und schließbar sind. Hier kann der Sensor 19a also beispielsweise über eine drei- oder mehradrige Leitung mit der Steuereinheit 15 verbunden sein. Die dritte Leitung oder die vierte Leitung ist in Fig. 6 nicht dargestellt.

Wenn ein zweiter Sensor 19b, der ebenfalls über eine mehradrige Leitung mit der Steuerung 15 verbindbar ist, mit der Steuerung 15 verbunden werden soll, kann von der Schaltersteuerung 24 über die Wirkleitung 38 der Schaltweg 41 verlagert werden, hin in eine in Fig. 6 gestrichelt angedeutete Position. In dieser gestrichelten Position ist der Ausgang 43a mit dem Eingang 42c und zugleich der Ausgang 43b mit dem Eingang 42d verbunden. In dieser geänderten Schaltposition sind die beiden Eingänge 42a, 42b offen oder unterbrochen; der Sensor 19a ist in dieser geänderten Schalterposition - gemäß der gestrichelten Darstellung des Schaltweges 41 in Fig. 6 - dann nicht mehr mit der Steuereinheit 15 verbunden.

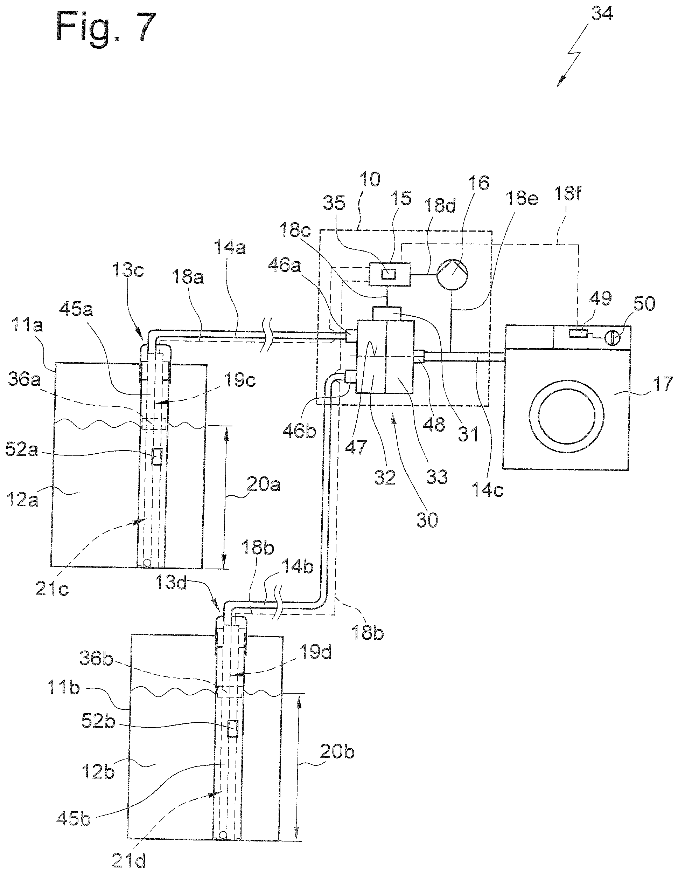

Im Folgenden soll anhand der Ausführungsbeispiele der Figuren 7 bis 10 ein weiterer Aspekt der Erfindung erläutert werden:
Fig. 7 zeigt ein Ausführungsbeispiel einer Dosiereinrichtung, das dem Ausführungsbeispiel der Fig. 1 sehr nahe kommt bzw. weitestgehend entspricht.

Eine Besonderheit besteht hier darin, dass die Sauglanze 13c mit einer Messelektronik 21c und die Sauglanze 13d mit einer Messelektronik 21d ausgestattet ist. Die beiden Messelektroniken 21c, 21d weisen jeweils Anschlüsse für unterschiedliche Teilsensoren auf, nämlich für einen Teilsensor 19c, der eine Information über den Füllstand 20a in dem Gebinde 11a übermitteln kann, und einen Anschluss für einen Teilsensor 52a, der einen Temperaturwert messen kann.

Die Dosiereinrichtung 10 gemäß Fig. 7 kann - analog zu den zuvor beschriebenen Ausführungsbeispielen - eine Schalteinrichtung 22 aufweisen, mit der jeweils eine der mehreren Messelektroniken 21c, 21d auswählbar ist, und mittels der die Steuereinheit 15 mit der Dosiereinrichtung 10 mit der entsprechenden Sauglanze eine Verbindung herstellen kann.

Von der Erfindung sind aber auch Dosiereinrichtungen 10 gemäß Fig. 7 umfasst, bei denen eine solche Schalteinrichtung 22 nicht vorhanden ist.

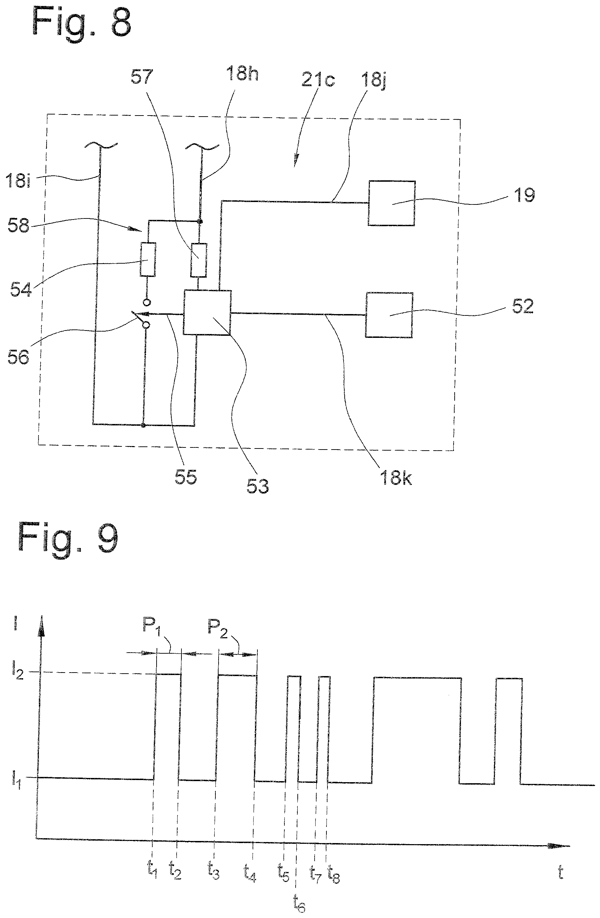

Bei dem Ausführungsbeispiel der Figuren 7 bis 10 soll nun anhand der Figuren 8 bis 10 erläutert werden, wie die Messelektronik 21c Informationen, die sie von den Teilsensoren 19 und 52 erhalten hat, besonders vorteilhaft übermitteln kann:
Ausweislich Fig. 8 ist die Sauglanze 13 mit der Messelektronik 21c über zwei Leitungen 18h, 18i mit der Dosiereinrichtung 10 verbunden. Es handelt sich um ein zweiadriges System. Die Messelektronik 21c der Sauglanze 13c erhält ihre Versorgungsspannung über diese Leitungen 18h, 18i von der Dosiereinrichtung 10.

Die Messelektronik 21c weist einen Prozessor 53 oder eine andere Recheneinheit auf, die über Verbindungsleitungen 18j, 18k mit einem ersten Teilsensor 19 in Form eines Füllstandsmessers und einem zweiten Teilsensor 52 in Form eines Temperaturmessers verbunden ist. Die Recheneinheit 53 kann die von den Sensoren 19, 52 erhaltenen Messwerte empfangen und verarbeiten.

Ausweislich Fig. 8 ist der Prozessor 53 über einen Widerstand 57 mit der Spannungsversorgungsleitung 18h verbunden.

Darüber hinaus ist ein zweiter Leitungszweig 58 zu dem Widerstand 57 und dem Prozessor 53 parallel geschaltet. Dieser Leitungszweig 58 kann über einen Schalter 56 zugeschaltet werden, und umfasst einen zweiten Widerstand 54. Der Prozessor 53 kann über eine Wirkleitung 55 auf den Schalter 56 einwirken.

Für den Fall, dass der Schalter 56 in seiner in Fig. 8 dargestellten geöffneten Stellung angeordnet ist, fließt durch den zweiten Leitungszweig 58 kein Strom.

Der Prozessor 53 bzw. die gesamte Messelektronik 21c wird in diesem Fall über den Widerstand 57 mit Versorgungsspannung versorgt. Damit fließt durch die Messelektronik 21c nur ein Ruhestrom, der im Folgenden mit I₁ bezeichnet wird.

Für den Fall, dass die Messelektronik 21c von dem ersten Teilsensor 19 und/oder dem zweiten Teilsensor 52 Informationen erhält, kann sie diese verarbeiten, und in Ansteuerungswerte für den Schalter 56 umrechnen. Infolge dieser Umrechnung kann der Schalter 56 zu vorgegebenen Zeitpunkten und/oder über vorgegebene Zeitdauern in eine in Fig. 8 nicht dargestellte Schließstellung überführt werden. Jedes Mal dann, wenn sich der Schalter 56 in einer Schließstellung befindet, fließt auch durch den Leitungszweig 28 hindurch ein Strom.

Insgesamt ist der bei geschlossenem Schalter 56 durch die Messelektronik 21c fließende Gesamtstrom - als Summenstrom der durch die beiden Leitungszweige fließenden Teilströme - dann größer und stellt ein höheres Stromniveau I₂ dar.

Fig. 9 zeigt eine Abfolge von Stromniveaus, die bei einer entsprechenden Betätigung des Schalters 56 durch die Spannungsversorgungsleitungen 18h, 18i fließen.

Zu den Zeitpunkten t₁, t₃, t₅, t₇ usw. ist der Schalter 56 jeweils geschlossen worden, und zu den Zeitpunkten t₂, t₄, t₆, t₈ ist der Schalter jeweils wieder geöffnet worden.

Durch die entsprechende Öffnungsreihenfolge von Schalteröffnungen und Schalterschließungen ergeben sich unterschiedliche Pulsdauern P₁, P₂ etc.

Mittels dieser unterschiedlichen Pulsdauern können die Informationen, die als Messwerte von den Sensoren 19, 52 erhalten worden sind, über die Spannungsversorgungsleitungen 18h, 18i übermittelt werden. Hierzu kann beispielsweise auf bekannte Modulationsverfahren zurückgegriffen werden. Die Pulsdauern P₁, P₂ bzw. die Abfolge der Stromniveaus I₁, I₂ enthalten codierte Informationen über die gemessenen Werte, die von den Sensoren ermittelt werden. So kann beispielsweise ein Temperaturwert in dem Gebinde oder eine bestimmte Füllhöhe an Medium in entsprechende Puls-Breitensignale umgerechnet werden und von der Messelektronik auf die Spannungsversorgungsleitung aufmoduliert werden. Von der Auswerteelektronik 27 an der Dosiereinrichtung kann die Information dann durch ein entsprechendes De-Kodierverfahren wieder extrahiert werden.

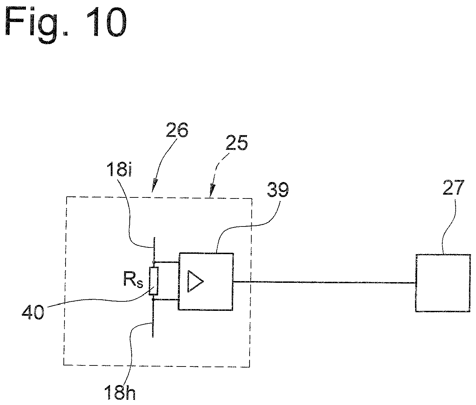

Fig. 10 zeigt die Auswerteelektronik 27 an der Dosiereinrichtung 10. Zu dieser gehört auch eine Spannungsversorgungseinheit 26.

Die Spannungsversorgungsleitungen 18h, 18i laufen durch die Auswerteelektronik 27 hindurch. Der Strom I, bzw. I₁, I₂, fällt über einen Shunt-Widerstand 40 ab, und wird von einem Verstärker 39 verstärkt und der Auswerteelektronik 27 zugeführt.

Sowohl die Messschaltung 25 an der Dosiereinrichtung als auch die Messelektronik 21c in der Sauglanze sind in den Figuren 8 und 10 lediglich sehr schematisch dargestellt. Tatsächlich umfassen die Messelektronik 21c und die Auswerteelektronik 25 noch zahlreiche weitere in den Figuren nicht dargestellte elektronische Bauelemente.

Die Auswerteelektronik 27 kann aus der erhaltenen Spannungs- bzw. Stromfolge die erhaltenen Informationen heraus extrahieren und so beispielsweise eine Information über den Füllstand des Mediums in dem Gebinde, sowie eine Information über die Temperatur in dem Gebinde erhalten. Die in Fig. 10 nicht dargestellte Steuereinheit 15 der Dosiereinrichtung 10 kann diese erhaltenen Informationen bei der Durchführung von Dosierprozessen berücksichtigen.

Insbesondere bei einem Lastmodulation-Verfahren kann der Bauaufwand und Schaltungsaufwand der Auswerteelektronik 27 klein gehalten werden, so dass insgesamt eine preiswerte Fertigung möglich wird.

Anstelle der beschriebenen Lastmodulation können auch andere Powerline Communication-Verfahren (PLC) genutzt werden. So können beispielsweise hochfrequente Signale, die die Informationen enthalten, auf die Spannungsversorgungsleitung aufmoduliert werden.

## Patentansprüche

1. Dosiereinrichtung (10) zur Dosierung und Zuführung von Medien (12a, 12b) über Fluidleitungen (14a, 14b) zu wenigstens einem Zielgerät (17), insbesondere zu einer gewerblichen textilen Waschmaschine, wobei die Dosiereinrichtung mit wenigstens einem Behältnis (11a, 11b) verbunden ist, das mit einem Medium befüllt ist, und wobei die Dosiereinrichtung eine Steuereinheit (15, 15a, 15b) aufweist, die zur Durchführung eines Dosierprozesses unter Zuhilfenahme wenigstens einer Pumpe (16) eine Entnahme eines bestimmten Volumens an Medium aus dem Behältnis und eine Förderung dieses Volumens hin zu dem Zielgerät veranlasst, **dadurch gekennzeichnet, dass** die Steuereinheit (15) mit einer Mehrzahl von Sensoren (19a, 19b, 19c) verbindbar ist, und dass der Steuereinheit (15) eine Schalteinrichtung (22) zugeordnet ist, mit der jeweils einer der Sensoren zur Verbindung mit der Steuereinheit auswählbar ist.

2. Dosiereinrichtung nach Anspruch 1, **dadurch gekennzeichnet, dass** der Steuereinheit (15) eine Schaltersteuerung (24) zugeordnet ist, mit der die Schalteinrichtung (22) ansprechbar ist.

3. Dosiereinrichtung nach Anspruch 1 oder 2, **dadurch gekennzeichnet, dass** zu der Steuereinheit (15) eine Messschaltung (25) gehört, wobei mittels der Schalteinrichtung (22) jeweils einer der Sensoren (23) mit der Messschaltung verbindbar ist.

4. Dosiereinrichtung nach Anspruch 3, **dadurch gekennzeichnet, dass** die Messschaltung (25) als Strommessschaltung ausgebildet ist.

5. Dosiereinrichtung nach einem der vorangegangenen Ansprüche, **dadurch gekennzeichnet, dass** zu der Steuereinheit (15) eine Versorgungseinheit (26), insbesondere eine Spannungsversorgungseinheit oder eine Stromversorgungseinheit, gehört, wobei mittels der Schalteinrichtung (22) jeweils einer der Sensoren (23) mit der Versorgungseinheit (26) verbindbar ist.

6. Dosiereinrichtung nach einem der vorangegangenen Ansprüche, **dadurch gekennzeichnet, dass** die Schalteinrichtung (22) regelmäßig, insbesondere periodisch, oder bedarfsweise, insbesondere auf Abruf, betätigbar ist.

7. Dosiereinrichtung nach einem der vorangegangenen Ansprüche, **dadurch gekennzeichnet, dass** wenigstens einer der Sensoren (19a, 19b) zur Überwachung eines Füllstandes (20) an Medium (12a, 12b) in einem Behältnis (11a, 11b) ausgebildet ist.

8. Dosiereinrichtung nach einem der vorangegangenen Ansprüche, **dadurch gekennzeichnet, dass** eine von der Schalteinrichtung (22) ansprechbare Verbindungsleitung (18a, 18b) zwischen der Steuereinheit (15) und dem Sensor (19, 20) zwei Leiter oder mehr als zwei Leiter umfasst.

9. Dosiereinrichtung nach einem der vorangegangenen Ansprüche, **dadurch gekennzeichnet, dass** der Steuereinheit (15) eine Auswerteelektronik (27) zugeordnet ist, mit der von dem Sensor (19, 20) erhaltene Informationen, insbesondere Messwerte, auswertbar sind.

10. Dosiereinrichtung nach einem der vorangegangenen Ansprüche, **dadurch gekennzeichnet, dass** die Schalteinrichtung (22) einen oder mehrere Analogschalter oder einen oder mehrere Analogmultiplexer umfasst.

11. Dosiereinrichtung nach einem der vorangegangenen Ansprüche, **dadurch gekennzeichnet, dass** eine Verbindungsleitung (18a, 18b) zwischen der Steuereinheit und einem Sensor eine Schnittstelle (29a, 29b) insbesondere eine genormte Schnittstelle, insbesondere eine genormte Stromschnittstelle, umfasst.

12. Verfahren zur Dosierung und Zuführung von Medien (12a, 12b) über Fluidleitungen zu wenigstens einem Zielgerät (17), insbesondere zu einer gewerblichen textilen Waschmaschine, wobei eine Dosiereinrichtung (10) mit wenigstens einem Behältnis (11a, 11b) verbunden ist, das mit einem Medium (12a, 12b) befüllt ist, und wobei die Dosiereinrichtung (10) eine Steuereinheit (15) aufweist, die zur Durchführung eines Dosierprozesses unter Zuhilfenahme wenigstens einer Pumpe (16) eine Entnahme eines bestimmten Volumens an Medium aus dem Behältnis und eine Förderung dieses Volumens hin zu dem Zielgerät (17) veranlasst, **gekennzeichnet durch** die folgenden Schritte:
a) Bereitstellen einer Mehrzahl von Sensoren (19a, 19b), die mit der Steuereinheit (15) verbindbar sind,
b) Bereitstellen einer Schalteinrichtung (22), die zwischen den Sensoren (19a, 9b) und der Steuereinheit (15) angeordnet ist,
c) Ansprechen der Schalteinrichtung (22) und hierdurch Auswählen eines Sensors (19a), und Verbinden des ausgewählten Sensors (23) mit der Steuereinheit (15).

13. Verfahren nach Anspruch 12, **gekennzeichnet durch** den folgenden Schritt:
d) Auswerten eines von dem ausgewählten Sensor (23) erhaltenen Messwertes **durch** die Steuereinheit (15).

14. Schalteinrichtung (22) zur Verwendung mit einer Dosiereinrichtung (10), insbesondere zur Verwendung mit einer Dosiereinrichtung nach einem der Ansprüche 1 bis 11, umfassend eine Mehrzahl von Eingängen (42a, 42b, 42c, 42d), wobei jeder Eingang mit einem Sensor (19a, 19b, 19c, 19d) verbindbar ist oder verbunden ist, der einen Messwert ausgibt, der für die Durchführung eines von der Dosiereinrichtung (10) veranlassten Dosierprozesses erforderlich oder vorteilhaft ist, und umfassend einen Ausgang (43), der fest mit einer Steuereinheit (15) der Dosiereinrichtung (10) verbindbar ist oder verbunden ist, wobei der Schalteinrichtung (22) eine Schaltersteuerung (24) zugeordnet ist, mit der die Schalteinrichtung ansprechbar ist, und wobei infolge eines Ansprechens jeweils einer der Eingänge (42a, 42b, 42c, 42d) der Schalteinrichtung (22) mit dem Ausgang (43) der Schalteinrichtung (22) verbunden wird.

15. Dosiereinrichtung (10) zur Dosierung und Zuführung von Medien (12a, 12b) über Fluidleitungen (14a, 14b) zu wenigstens einem Zielgerät (17), insbesondere zu einer gewerblichen textilen Waschmaschine, wobei die Dosiereinrichtung über wenigstens eine Sauglanze (13c, 13d) mit wenigstens einem Behältnis (11a, 11b) verbunden ist, das mit einem Medium befüllt ist, und wobei die Dosiereinrichtung eine Steuereinheit (15, 15a, 15b) aufweist, die zur Durchführung eines Dosierprozesses unter Zuhilfenahme wenigstens einer Pumpe (16) eine Entnahme eines bestimmten Volumens an Medium aus dem Behältnis und eine Förderung dieses Volumens hin zu dem Zielgerät veranlasst, **dadurch gekennzeichnet, dass** die Sauglanze (13c, 13d) eine Messelektronik (21c, 21d) zur Aufnahme von Messwerten von einem Sensor oder von mehreren Teilsensoren (19c, 19d) aufweist, dass die Messelektronik von der Dosiereinrichtung mit Betriebsspannung versorgt wird, und dass die Messelektronik Informationen über die von dem Sensor oder von den Teilsensoren erhaltenen Messwerte über die Spannungsversorgungsleitung (18h, 18i) an die Dosiereinrichtung übermittelt.
